# DEMANDE DE BREVET EUROPEEN

(11) **EP 1 672 229 A1**
(43) Date de publication de la demande: **21.06.2006**
(21) Numéro de dépôt: 04447277.7
(22) Date de dépôt: 15.12.2004
(51) Int. Cl.: F16B 23/00, F16B 35/06, A63B 29/02

(54) **Vis à tête piton pour le montage des plafonds suspendus ou outres**

(71) Demandeur: SPRL B.H.G. EUROGYP, 7331 Baudour (BE)
(72) Inventeur: Gallo, Miguel, 7331 Baudour (BE); Herraiz, Miguel, 7301 Boussu (BE); Prieto, Juan, 7090 Braine le Compte (BE); Siegfried, Stadler, 7330 Saint Ghislain (BE)

(57) **Abrégé**

L'invention a pour objet une tête à vis de piton, c'est-à-dire une tête avec une perforation (1) dans laquelle on peut insérer des systèmes à suspension ou traction en forme de ligaments souples ou rigides notamment des dispositifs pour le montage de plafonds suspendus.
Des vis équipées d'une tête suivant la revendication s'adaptent parfaitement et restent stables par exemple dans un dispositif rotatif standard de type douille prévu pour des vis à têtes hexagonales ou dans une douille spécialement conçue et peuvent ainsi être enfoncées à l'aide d'une visseuse électrique en une seule opération menée d'une seule main.

## Description

Pour la suspension de petites et moyennes charges, notamment dans le secteur du bâtiment , sont utilisés des crochets en métal à anneau ouvert ou fermé appelés vis piton. Suivant la nature des structures portantes, notamment les plafonds, le montage de ce piton est une opération complexe qui demande l'usage de différents outils.

Le montage d'un piton classique dans une structure portante, par exemple en bois, s'effectue normalement de la façon suivante : enchâsser le piton à l'aide d'un marteau dans le bois suffisamment profond pour que le filet du piton s'engage en tournant. Pour vérifier l'engagement on tourne le piton une ou deux fois à la main jusqu'à obtention d' une résistance suffisante, prendre un outil rotatif (visseuse/foreuse électrique) équipé d'un crochet et actionner la machine qui enfonce alors le piton jusqu'à sa position finale.

Pour l' utilisation de ces pitons dans une structure en bois dur ou en bois composé (par ex. panneau multiplex, stratifié, OSB,MDF ou HDF,ect..) ou systèmes à porteurs métalliques, il est indispensable de forer un avant-trou, avant les 3 opérations décrites ci-dessus. La fixation de ces pitons dans des plafonds est effectuée généralement à partir d'un échafaudage ou un escabeau et l'usage de plusieurs outils comme foreuse, marteau, visseuse etc.. devient long, fastidieux et incommode parfois même dangereux car chasser un piton à l'aide d'un marteau dans le dessous d'un plafond demande l'usage des deux mains, le monteur ne peut donc plus se tenir à l'escabeau pour assurer son équilibre. De plus, l'escabeau demande une position relativement précise par rapport au point de fixation du piton, ce qui nécessite souvent un repositionnement de l'escabeau tout en tenant compte du fait que les différents outils décrits ci-dessus doivent être descendus et remontés. Toutes ces manipulations doivent être reproduites pour chaque piton à placer, par exemple pour un plafond suspendu de 50m² à peu près 40 fois.

Pour les installateurs de plafonds suspendus, par ex. plafonds en plaques de plâtre enrobés de carton, un autre problème se pose, si on utilise des suspensions à réglage rapide à base de fils d'acier de +/- 4 mm de diamètre, tel qu'on les trouve sur le marché, et qui ont en haut la forme d'un simple crochet ouvert destiné à être introduit dans l'anneau du piton. Ces systèmes se décrochent facilement si la tension vers le bas n'est pas constante, ce qui est le cas pendant le montage des structures et panneaux du plafond à suspendre. Pour éviter ce décrochement non désiré, il est parfois nécessaire de refermer le crochet à l'aide d'une pince, ce qui demande un outil supplémentaire et une force manuelle non négligeable ainsi que du temps supplémentaire.

L'invention est une « vis à tête piton » de telle forme qu'elle rentre facilement dans un dispositif rotatif de type clefs à douilles polygonales standard ou spécialement conçues et reste stable dans celui-ci, et permet ainsi, à l'aide d'une machine rotative motorisée (visseuse ou foreuse), d'enfoncer cette vis équipée d'une tête suivant l'invention en une seule opération, menée avec une seule main et également à distance si cette douille est équipée d'un prolongement, par exemple dans le dessous d'un plafond à une hauteur de +/- 330 cm et ce sans l'usage d'un échafaudage ou d'un escabeau, ce qui diminuera les risques d'accidents et représentera un gain de temps considérable.

La tête de cette 'vis piton' est équipée d'une perforation de telle manière que l'on peut accrocher des systèmes de suspension ou traction à l'aide de ligaments souples ou rigides, par exemple des crochets métalliques, réglables ou non, pour lesquels cette perforation a un diamètre qui permet de passer les crochets à suspension à réglage rapide à base de fils d'acier de +/- 4mm de diamètre, tels qu'on les trouve sur le marché, uniquement si on les incline au moins de 40°, et ne peuvent ainsi pas se décrocher à partir d'une position verticale. Cette tête de 'vis piton' peut être appliquée de préférence à des vis dites auto-foreuses, ou auto-perceuses, mais aussi à toutes autres vis ayant des filets ou points standards ou spéciaux.

La forme et quelques variantes de tête de vis piton suivant la revendication principale et les sous revendications sont illustrés dans 6 figures : figure 1 montre une tête suivant revendication 1 , figure 2 montre une tête suivant sous revendication 3, les figures ***3*** et ***4*** montrent des têtes suivant sous revendication 5, et figure ***5*** montre une tête suivant sous revendication 6, figure ***6*** montre une tête suivant sous revendication 7.

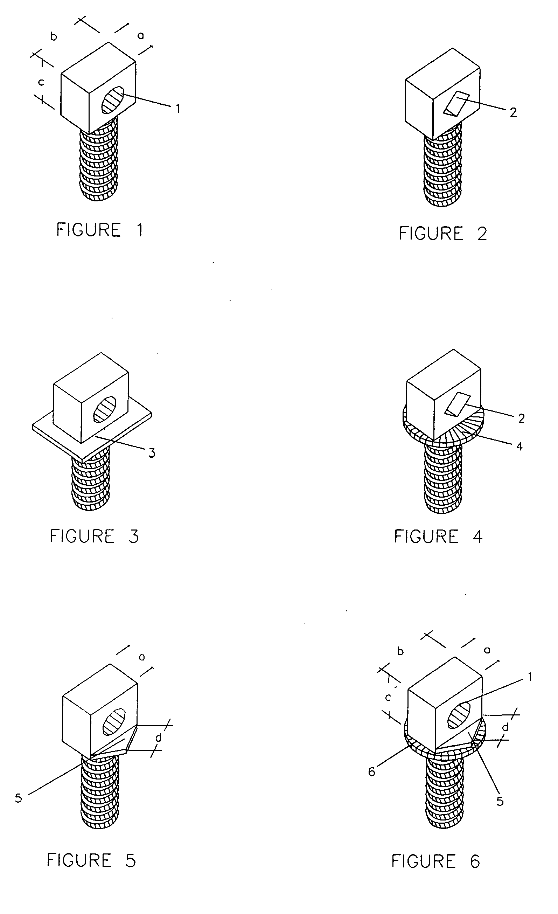

La figure ***5*** montre clairement que si on respecte la sous revendication 4 , c'est-à-dire que les proportions de longueur ***a*** par rapport à la longueur ***b*** = 3/5 et c > 1,5 x ***a**,* cette tête de vis s'adapte parfaitement à une douille hexagonale standard et reste stable dans celle-ci si les valeurs absolues de ***a*** et ***b*** sont conformes aux mesures standard pour vis à tête hexagonale.

Si les propositions suivant les sous revendications 4 ne sont pas respectées, il faut donc utiliser une douille spéciale pour assurer une position stable de la vis dans celle-ci.

## Revendications

1. Tête pour vis auto foreuse, auto perceuse et des vis de tout autre filet ou point avec une perforation dans laquelle on peut insérer des moyens de suspensions ou tractions en forme de ligaments souples ou rigides, notamment des dispositifs pour le montage des plafonds suspendus , **caractérisée par** une forme de parallélépipède rectangle droit et une perforation ***1*** perpendiculaire par rapport à l'axe de vis.

2. Tête de vis suivant revendication 1 **caractérisée en ce que** la perforation ***1*** est ronde.

3. Tête de vis suivant revendication 1 **caractérisée en ce que** la perforation ***2*** est polygonale.

4. Tête devis suivant revendication 1 à 3 **caractérisée en ce que** les proportions du parallélépipède rectangle droit sont les suivantes : la largeur ***a*** par rapport à la longueur ***b*** est égale à 3/5 et la hauteur ***c*** est au moins une fois et demi la longueur du côté ***a**,* des proportions qui assurent une position stable dans un dispositif rotatif standard de type douille prévu pour des vis à tête hexagonales.

5. Tête de vis suivant revendications 1 à 4 **caractérisée par** l'ajoute d'une base polygonale ***3*** ou ronde ***4***, ce qui permet de limiter l'enfoncement de la vis dans le support.

6. Tête de vis suivant revendication 5 **caractérisée en ce que** la base polygonale est d'une forme hexagonale équilatérale 5 où la longueur d'un côté est égale à la largeur ***a*** du parallélépipède rectangle droit, ce qui augmente le contact entre le dispositif rotatif et la tête de vis, ainsi que la stabilité de la tête dans le dispositif rotatif.

7. Tête de vis suivant revendication 6 **caractérisée par** l'ajoute d'une base ronde *6* adjacente à la base hexagonale ***5***, ce qui permet de limiter l'enfoncement de la vis dans le support.
